# EUROPEAN PATENT APPLICATION

(11) **EP 4 628 466 A1**
(43) Date of publication of application: **08.10.2025**
(21) Application number: 23897177.4
(22) Date of filing: 31.08.2023
(51) Int. Cl.: C04B 24/16, C04B 28/14, C04B 38/10, C09K 23/02, C04B 103/42

(54) **BUBBLE-CONTAINING HYDRAULIC COMPOSITION**

(30) Priority: 29.11.2022 JP 2022189786
(71) Applicant: Kao Corporation, Chuo-ku, Tokyo 103-8210 (JP)
(72) Inventor: TANIMOTO, Ryu, Wakayama-shi, Wakayama 640-8580 (JP); TAMAGAWA, Ojiro, Wakayama-shi, Wakayama 640-8580 (JP)
(74) Representative: Hoffmann Eitle
(86) International application number: PCT/JP2023/031793
(87) International publication number: WO 2024/116517

(57) **Abstract**

The present invention provides a bubble-containing hydraulic composition and a method for producing the same that attain a low specific gravity of a hardened product of the bubble-containing hydraulic composition and a large bubble size in the hardened product of the bubble-containing hydraulic composition.

A bubble-containing hydraulic composition containing a hydraulic powder, water, and (A) an alkyl or alkenyl sulfate or a salt thereof (hereinafter referred to as component (A)), wherein the composition contains, as component (A), (A1) an alkyl or alkenyl sulfate having an alkyl or alkenyl group with 10 carbons, or a salt thereof (hereinafter referred to as component (A1)), and (A2) an alkyl or alkenyl sulfate having an alkyl or alkenyl group with 12 carbons, or a salt thereof (hereinafter referred to as component (A2)), a total content of components (A1) and (A2) in component (A) is 99 mass% or more, and a mass ratio of a content of component (A1) to a content of component (A2), (A1)/(A2), is 0.2 or more and 2.4 or less.

## Description

### Field of the Invention

The present invention relates to a bubble-containing hydraulic composition and a method for producing the same, and a foaming agent for hydraulic compositions.

### Background of the Invention

The weight of hydraulic compositions containing cement or gypsum as a hardening agent is reduced by introducing bubbles thereinto. In usual, a lightweight bubble-containing hydraulic composition is produced by mixing a hydraulic composition or fine aggregates or various kinds of admixture materials with a foam obtained by foaming a liquid composition containing a foaming agent and water.

JP-A 2018-527163 discloses a surfactant composition for gypsum boards comprising a branched alkyl sulfate having 8 to 12 carbon atoms, optionally a linear alkyl sulfate having 8 to 12 carbon atoms, and optionally an alkyl ether sulfate having 8 to 13 carbon atoms for the purpose of reducing the weight of a gypsum wallboard while still enabling the gypsum wallboard to perform its functions as a building material. Further, the literature discloses a surfactant composition consisting of 75% of a C10 alkyl sulfate and 25% of a C12 alkyl sulfate in the Examples.

JP-A 2004-529050 addresses the problem of providing an inexpensive surfactant which can be easily prepared from commercially available products and which exhibits a strong foaming power, and discloses a gypsum composition comprising, in combination with gypsum and water, a surfactant composition comprising alkyl sulfates of the formula H(CH₂)ₙOSO₃⁻M⁺, in which n is from 6 to 16, the mean number of carbon atoms in the alkyl sulfate composition nₘ being between 10 and 11, and M is a monovalent cation. Further, the literature discloses in the Examples that a surfactant containing 84.2% by weight of a C10 alkyl sulfate and 15.8% by weight of a C12 alkyl sulfate was used, and the surfactant composition was mixed with water and stirred in a mixer and the volume of a foam formed then was measured as an evaluation thereof.

### Summary of the Invention

From the viewpoint of environmental (CO₂) reduction effects or costs in terms of production, transportation, or raw material procurement, there is a need to further reduce the weight of a hardened product of a bubble-containing hydraulic composition containing cement or gypsum as a hardening agent.

The bubble-containing hydraulic composition can reduce the specific gravity and the weight of the hardened product of the hydraulic composition since it contains bubbles. However, if the volume (proportion) of bubbles is increased to further reduce the weight of the hardened product of the hydraulic composition, the strength of the hardened product tends to decrease because of a reduced proportion of the hydraulic composition. On the other hand, as described in paragraph [0004] of JP-A H10-330174, if the size of bubbles in the bubble-containing hydraulic composition is made to be larger than in a bubble-containing hydraulic composition of the same specific gravity, the strength of the hardened product of the bubble-containing hydraulic composition can be increased. Further, the bubble-containing hydraulic composition with a larger bubble size is more quickly dried when the hardened product of the bubble-containing hydraulic composition is obtained, and thus brings about advantages such as a reduction in fuel expenses for drying, a reduction in CO₂ emission, or the like. Further, the bubble-containing hydraulic composition with a larger bubble size, in which the distance between bubbles increases and bubbles are unlikely to combine, can achieve improved thermal insulation or acoustic insulation.

Therefore, there is a need for technology to reduce the specific gravity of a bubble-containing hydraulic composition and increase the size of bubbles in the bubble-containing hydraulic composition.

The present invention provides a bubble-containing hydraulic composition and a method for producing the same that attain a low specific gravity of a hardened product of the bubble-containing hydraulic composition and a large bubble size in the hardened product of the bubble-containing hydraulic composition, and a foaming agent for hydraulic compositions that can reduce the specific gravity of a hardened product of a bubble-containing hydraulic composition and increase the size of bubbles in the hardened product of the bubble-containing hydraulic composition.

The present invention relates to a bubble-containing hydraulic composition containing a hydraulic powder, water, and (A) an alkyl or alkenyl sulfate or a salt thereof (hereinafter referred to as component (A)), wherein the composition contains, as component (A), (A1) an alkyl or alkenyl sulfate having an alkyl or alkenyl group with 10 carbons, or a salt thereof (hereinafter referred to as component (A1)), and (A2) an alkyl or alkenyl sulfate having an alkyl or alkenyl group with 12 carbons, or a salt thereof (hereinafter referred to as component (A2)), a total content of components (A1) and (A2) in component (A) is 99 mass% or more, and a mass ratio of a content of component (A1) to a content of component (A2), (A1)/(A2), is 0.2 or more and 2.4 or less.

Further, the present invention relates to a method for producing a bubble-containing hydraulic composition including the following steps 1 and 2:
<step 1>
   a step of foaming a liquid composition containing a foaming agent for hydraulic compositions and water to obtain a foam,
   the foaming agent for hydraulic compositions containing component (A), wherein the agent contains components (A1) and (A2) as component (A), a total content of components (A1) and (A2) in component (A) is 99 mass% or more, and a mass ratio of a content of component (A1) to a content of component (A2), (A1)/(A2), is 0.2 or more and 2.4 or less; and
<step 2>
   a step of mixing a hydraulic powder, water, and the foam obtained in step 1.

Further, the present invention relates to a foaming agent for hydraulic compositions containing component (A), wherein the agent contains components (A1) and (A2) as component (A), a total content of components (A1) and (A2) in component (A) is 99 mass% or more, and a mass ratio of a content of component (A1) to a content of component (A2), (A1)/(A2), is 0.2 or more and 2.4 or less.

The present invention provides a bubble-containing hydraulic composition and a method for producing the same that attain a low specific gravity of a hardened product of the bubble-containing hydraulic composition and a large bubble size in the hardened product of the bubble-containing hydraulic composition, and a foaming agent for hydraulic compositions that can reduce the specific gravity of a hardened product of a bubble-containing hydraulic composition and increase the size of bubbles in the hardened product of the bubble-containing hydraulic composition.

### Embodiments of the Invention

The reason why the bubble-containing hydraulic composition and the method for producing the same of the present invention can attain a low specific gravity of a hardened product of the bubble-containing hydraulic composition and a large bubble size in the hardened product of the bubble-containing hydraulic composition, and why the foaming agent for hydraulic compositions of the present invention can reduce the specific gravity of a hardened product of a bubble-containing hydraulic composition and increase the size of bubbles in the hardened product of the bubble-containing hydraulic composition is not wholly certain, but is inferred to be as follows. It is inferred that the foaming agent for hydraulic compositions in which component (A1) that forms a foam film which is highly fluid and which makes bubbles more likely to combine is blended with a predetermined amount of component (A2) that forms a foam film which makes bubbles unlikely to break or combine can form a foam film attaining both flexibility and hardness, and prevents bubbles from disappearing as well as allows bubbles to combine in the production process of a bubble-containing hydraulic composition, thereby making it possible to attain both a reduced weight of a hardened product of the bubble-containing hydraulic composition and an increased size of bubbles therein. On the other hand, it is inferred that if the proportion of component (A1) in the content proportion of components (A1) and (A2) is too large, bubbles are more likely to break, and thus, while an increased size of bubbles in a hardened product of a bubble-containing hydraulic composition can be achieved, it becomes difficult to reduce the weight of the hardened product.

### [Foaming agent for hydraulic compositions]

### <Component (A)>

The foaming agent for hydraulic compositions of the present invention contains an alkyl or alkenyl sulfate or a salt thereof as component (A).

Further, the foaming agent for hydraulic compositions of the present invention contains, as component (A), (A1) an alkyl or alkenyl sulfate having an alkyl or alkenyl group with 10 carbons, or a salt thereof (hereinafter referred to as component (A1)), and (A2) an alkyl or alkenyl sulfate having an alkyl or alkenyl group with 12 carbons, or a salt thereof (hereinafter referred to as component (A2)).

Component (A1) is preferably an alkyl or alkenyl sulfate having a linear alkyl or alkenyl group with 10 carbons, or a salt thereof.

Specific examples of component (A1) include one or more selected from decyl sulfate, 2-propyl heptyl sulfate, and salts of these, and decyl sulfate or a salt thereof is preferable.

Component (A2) is preferably an alkyl or alkenyl sulfate having a linear alkyl or alkenyl group with 12 carbons, or a salt thereof.

Specifically, lauryl sulfate or a salt thereof is preferable as component (A2).

Examples of the salts of components (A), (A1), and (A2) include one or more selected from alkali metal salts such as sodium salts, potassium salts, or the like, ammonium salts, and organic ammonium salts.

### <Composition and others>

The foaming agent for hydraulic compositions of the present invention contains component (A) in an amount of preferably 2 mass% or more, more preferably 10 mass% or more, further preferably 15 mass% or more, furthermore preferably 20 mass% or more, and furthermore preferably 25 mass% or more, and preferably 40 mass% or less, more preferably 35 mass% or less, and further preferably 30 mass% or less in the composition from the viewpoint of increasing the size of bubbles in a hardened product of a bubble-containing hydraulic composition and reducing the specific gravity of the hardened product of the bubble-containing hydraulic composition.

In the present invention, the mass of component (A) or component (A1) or (A2) contained in component (A) is specified by using a value expressed in terms of a sodium salt.

In the foaming agent for hydraulic compositions of the present invention, a total content of components (A1) and (A2) in component (A) is 99 mass% or more and preferably 99.5 mass% or more, and 100 mass% or less and preferably 100 mass% from the viewpoint of increasing the size of bubbles in a hardened product of a bubble-containing hydraulic composition and reducing the specific gravity of the hardened product of the bubble-containing hydraulic composition.

In the foaming agent for hydraulic compositions of the present invention, a content of component (A1) in component (A) is preferably 20 mass% or more, more preferably 30 mass% or more, and further preferably 40 mass% or more, and preferably 75 mass% or less, more preferably 65 mass% or less, and further preferably 53 mass% or less from the viewpoint of increasing the size of bubbles in a hardened product of a bubble-containing hydraulic composition and reducing the specific gravity of the hardened product of the bubble-containing hydraulic composition, and a content of component (A2) in component (A) is preferably 25 mass% or more, more preferably 35 mass% or more, and further preferably 45 mass% or more, and preferably 80 mass% or less, more preferably 70 mass% or less, further preferably 65 mass% or less, and further preferably 53 mass% or less from the viewpoint of increasing the size of bubbles in a hardened product of a bubble-containing hydraulic composition and reducing the specific gravity of the hardened product of the bubble-containing hydraulic composition.

A mass ratio of a content of component (A1) to a content of component (A2) in the foaming agent for hydraulic compositions of the present invention, (A1)/(A2), is 0.2 or more, preferably 0.3 or more, more preferably 0.6 or more, and further preferably 0.9 or more, and 2.4 or less, preferably 2.3 or less, more preferably 2.0 or less, further preferably 1.9 or less, and further preferably 1.3 or less from the viewpoint of increasing the size of bubbles in a hardened product of a bubble-containing hydraulic composition and reducing the specific gravity of the hardened product of the bubble-containing hydraulic composition. Further, a mass ratio of a content of component (A1) to a content of component (A2) in the foaming agent for hydraulic compositions of the present invention, (A1)/(A2), is preferably 1.5 or less and more preferably 1.3 or less from the viewpoint that the foaming agent for hydraulic compositions of the present invention used for the production of a bubble-containing hydraulic composition is less uneven in concentration after freezing and thawing.

From the viewpoint of achieving the effects of the present invention, it is preferable that the foaming agent for hydraulic compositions of the present invention not contain, as component (A), an alkyl or alkenyl sulfate having an alkyl or alkenyl group with 14 or more carbons, or a salt thereof.

Examples of the alkyl or alkenyl sulfate having an alkyl or alkenyl group with 14 or more carbons, or a salt thereof include one or more selected from myristyl sulfate, cetyl sulfate, stearyl sulfate, oleyl sulfate, and salts of these.

The foaming agent for hydraulic compositions of the present invention may contain a polyoxyethylene alkyl or alkenyl ether sulfate or a salt thereof, but the content thereof is restricted from the viewpoint of achieving the effects of the present invention.

Examples of the polyoxyethylene alkyl or alkenyl ether sulfate or a salt thereof include one or more selected from polyoxyethylene octyl ether sulfate, polyoxyethylene decyl ether sulfate, polyoxyethylene lauryl ether sulfate, polyoxyethylene tridecyl ether sulfate, polyoxyethylene myristyl ether sulfate, polyoxyethylene cetyl ether sulfate, polyoxyethylene stearyl ether sulfate, and salts of these.

A content of the polyoxyethylene alkyl or alkenyl ether sulfate or a salt thereof in the foaming agent for hydraulic compositions of the present invention is preferably 10 mass% or less, more preferably 5 mass% or less, further preferably 3 mass% or less, furthermore preferably 1 mass% or less, and furthermore preferably 0.5 mass% or less from the viewpoint of increasing the size of bubbles in a hardened product of a bubble-containing hydraulic composition. In the present invention, the mass of the polyoxyethylene alkyl or alkenyl ether sulfate or a salt thereof is specified by using a value expressed in terms of a sodium salt. From the viewpoint of increasing the size of bubbles in a hardened product of a bubble-containing hydraulic composition, it is preferable that the foaming agent for hydraulic compositions of the present invention not contain a polyoxyethylene alkyl or alkenyl ether sulfate or a salt thereof.

The foaming agent for hydraulic compositions of the present invention can contain a monohydric alcohol with 6 or more and 10 or less carbons as component (B) from the viewpoints of quick foamability and foam stability.

Component (B) has 6 or more, and 10 or less and preferably 8 carbons from the viewpoints of quick foamability and foam stability.

Component (B) is a monohydric alcohol having a linear or branched hydrocarbon group, preferably a linear or branched alkyl group, and more preferably a linear alkyl group from the viewpoints of quick foamability and foam stability.

Specific examples of component (B) include one or more selected from hexanol, octanol, decanol, 2-ethylhexanol, and 2-propylheptanol, and it is preferable that the agent contain preferably one or more selected from octanol and decanol and more preferably octanol from the viewpoint of foam generating performance.

The foaming agent for hydraulic compositions of the present invention can contain a nonionic surfactant as component (C) from the viewpoint of increasing the size of bubbles in a hardened product of a bubble-containing hydraulic composition and reducing the specific gravity of the hardened product of the bubble-containing hydraulic composition.

Examples of the nonionic surfactant include one or more selected from alkyl monoglyceryl ethers, polyoxyalkylene monoalkyl or alkenyl ethers, alkyl glycosides or alkyl polyglycosides (glycoside-type nonionic surfactants), sorbitan-based nonionic surfactants, aliphatic alkanol amides, fatty acid monoglycerides, and sucrose fatty acid esters. Among these, the agent preferably contains a glycoside-type nonionic surfactant from the viewpoint of increasing the size of bubbles in a hardened product of a bubble-containing hydraulic composition.

The foaming agent for hydraulic compositions of the present invention may contain water. The foaming agent for hydraulic compositions of the present invention contains water in an amount of preferably 10 mass% or more, preferably 20 mass% or more, more preferably 30 mass% or more, and further preferably 40 mass% or more, and preferably 90 mass% or less, more preferably 80 mass% or less, and further preferably 70 mass% or less.

The foaming agent for hydraulic compositions of the present invention can optionally contain thickeners, chelating agents, heavy metal scavengers, rust inhibitors, preservatives, colorants, fragrances, defoaming agents, solvents, dispersants, flocculants, water-soluble polymers, and others. However, those not qualifying as components (A), (A1), (A2), (B), or (C) are used as these.

The foaming agent for hydraulic compositions of the present invention is obtained by mixing components (A1) and (A2) as component (A) and optional components. During mixing, the solution may be appropriately heated to reduce its viscosity.

Examples of uses to which the foaming agent for hydraulic compositions of the present invention is directed include gypsum slurries, lightweight milk (aerated milk, air milk), lightweight mortar (aerated mortar, air mortar), lightweight concrete (aerated concrete, air concrete), fillers for backfilling, fillers for filling in, concrete building blocks, ALC (autoclaved lightweight aerated concrete), grouting materials, porous ceramics, bricks, fire-resistant materials, lightweight embankments, mortar for pumping, and other bubble-containing hydraulic compositions. Functions such as weight reduction, strength improvement, fluidity improvement, thermal insulation, heat resistance, thickening, and fluidity control are expected to be imparted by mixing bubbles in these bubble-containing hydraulic compositions.

Among these bubble-containing hydraulic compositions, the foaming agent for hydraulic compositions of the present invention is suitably used for gypsum slurries.

### [Bubble-containing hydraulic composition and method for producing the same]

In view of the entrainment of uniform bubbles, a preferable method for producing a bubble-containing hydraulic composition is a method including generating a foam from the foaming agent for hydraulic compositions of the present invention and blending the foam and a hydraulic material to achieve weight reduction by thus blending. The foaming agent for hydraulic compositions of the present invention or a mixed liquid obtained by diluting the agent with water may be directly kneaded into pastes, slurries, mortar, or concrete containing cement or gypsum as a hydraulic material. A method for adding the foaming agent for hydraulic compositions of the present invention to a hydraulic composition is not limited, and a method for foaming the foaming agent for hydraulic compositions of the present invention or the mixed liquid obtained by diluting the agent with water is not limited, either.

The present invention provides a bubble-containing hydraulic composition containing a hydraulic powder, water, and component (A), wherein the composition contains components (A1) and (A2) as component (A), a total content of components (A1) and (A2) in component (A) is 99 mass% or more, and a mass ratio of a content of component (A1) to a content of component (A2), (A1)/(A2), is 0.2 or more and 2.4 or less.

The bubble-containing hydraulic composition of the present invention can further contain component (B).

The bubble-containing hydraulic composition of the present invention can further contain component (C).

The matters described in the foaming agent for hydraulic compositions of the present invention can be appropriately applied to the bubble-containing hydraulic composition of the present invention.

Components (A), (A1), (A2), (B), and (C) are the same as in the aspects described in the foaming agent for hydraulic compositions of the present invention.

The hydraulic powder is a powder having the physical property of hardening by a hydration reaction, and examples include cement, gypsum, or the like, and gypsum is preferable.

Examples of the cement include ordinary Portland cement, belite cement, moderate heat cement, high early strength cement, ultra high early strength cement, sulfate resistant cement, or the like, and blast furnace slag cement, fly ash cement, silica fume cement, or the like obtained by adding thereto blast furnace slag, fly ash, silica fume, stone powder (calcium carbonate powder), or the like may also be used. One or more of these can be used.

A water/hydraulic powder ratio in the bubble-containing hydraulic composition of the present invention is preferably 20 mass% or more, more preferably 30 mass% or more, further preferably 40 mass% or more, furthermore preferably 50 mass% or more, and furthermore preferably 60 mass% or more from the viewpoint of the fluidity of a slurry of the hydraulic composition, and preferably 100 mass% or less, more preferably 90 mass% or less, and further preferably 80 mass% or less from the viewpoint of the strength of a hardened product of the hydraulic composition.

Here, the water/hydraulic powder ratio is the mass percentage (mass%) of water to the hydraulic powder in the hydraulic composition, and is calculated by water/hydraulic powder × 100. The water/hydraulic powder ratio is calculated on the basis of the amount of the powder having the physical property of hardening by a hydration reaction. If the powder having the physical property of hardening by a hydration reaction contains a high strength admixture material, the amount of the high strength admixture material is also included in the amount of the hydraulic powder. The same applies to the other quantitative relations in the hydraulic composition in connection with the hydraulic powder.

The bubble-containing hydraulic composition of the present invention contains component (A) in an amount relative to 100 parts by mass of the hydraulic powder of preferably 0.0005 parts by mass or more, more preferably 0.002 parts by mass or more, further preferably 0.004 parts by mass or more, and furthermore preferably 0.008 parts by mass or more, and preferably 0.1 parts by mass or less, more preferably 0.05 parts by mass or less, further preferably 0.03 parts by mass or less, and furthermore preferably 0.01 parts by mass or less from the viewpoint of reducing the specific gravity of a hardened product of the hydraulic composition and increasing the size of bubbles therein.

In the bubble-containing hydraulic composition of the present invention, a total content of components (A1) and (A2) in component (A) is 99 mass% or more and preferably 99.5 mass% or more, and 100 mass% or less and preferably 100 mass% from the viewpoint of reducing the specific gravity of a hardened product of the hydraulic composition and increasing the size of bubbles therein.

In the bubble-containing hydraulic composition of the present invention, a content of component (A1) in component (A) is preferably 20 mass% or more, more preferably 30 mass% or more, further preferably 40 mass% or more, and further preferably 45 mass% or more, and preferably 75 mass% or less, more preferably 65 mass% or less, and further preferably 53 mass% or less from the viewpoint of increasing the size of bubbles in a hardened product of the hydraulic composition and reducing the specific gravity of the hardened product of the hydraulic composition, and a content of component (A2) in component (A) is preferably 25 mass% or more, more preferably 35 mass% or more, and further preferably 45 mass% or more, and preferably 80 mass% or less, more preferably 70 mass% or less, further preferably 65 mass% or less, and further preferably 53 mass% or less from the viewpoint of increasing the size of bubbles in a hardened product of the hydraulic composition and reducing the specific gravity of the hardened product of the hydraulic composition.

A mass ratio of a content of component (A1) to a content of component (A2) in the bubble-containing hydraulic composition of the present invention, (A1)/(A2), is 0.2 or more, preferably 0.3 or more, more preferably 0.6 or more, and further preferably 0.9 or more, and 2.4 or less, preferably 2.3 or less, more preferably 2.0 or less, further preferably 1.9 or less, and further preferably 1.3 or less from the viewpoint of reducing the specific gravity of a hardened product of the hydraulic composition and increasing the size of bubbles therein. Further, a mass ratio of a content of component (A1) to a content of component (A2) in the bubble-containing hydraulic composition of the present invention, (A1)/(A2), is preferably 1.5 or less and more preferably 1.3 or less from the viewpoint that a foaming agent for hydraulic compositions used for the production of the bubble-containing hydraulic composition of the present invention is less uneven in concentration after freezing and thawing.

From the viewpoint of achieving the effects of the present invention, it is preferable that the bubble-containing hydraulic composition of the present invention not contain, as component (A), an alkyl or alkenyl sulfate having an alkyl or alkenyl group with 14 or more carbons, or a salt thereof.

The bubble-containing hydraulic composition of the present invention may contain a polyoxyethylene alkyl or alkenyl ether sulfate or a salt thereof, but the content thereof is restricted from the viewpoint of achieving the effects of the present invention.

A content of the polyoxyethylene alkyl or alkenyl ether sulfate or a salt thereof relative to 100 parts by mass of the hydraulic powder in the bubble-containing hydraulic composition of the present invention is preferably 0.001 parts by mass or less, more preferably 0.0008 parts by mass or less, further preferably 0.0006 parts by mass or less, and furthermore preferably 0.0001 parts by mass or less from the viewpoint of increasing the size of bubbles in a hardened product of the hydraulic composition.

From the viewpoint of increasing the size of bubbles in a hardened product of the hydraulic composition, it is preferable that the bubble-containing hydraulic composition of the present invention not contain the polyoxyethylene alkyl or alkenyl ether sulfate or a salt thereof.

The bubble-containing hydraulic composition of the present invention can contain fine aggregates and/or coarse aggregates. Further, the bubble-containing hydraulic composition of the present invention can contain admixture agents or admixture materials publicly known in the art.

A hardened product of the bubble-containing hydraulic composition of the present invention can be obtained by drying and curing the composition.

A specific gravity of the hardened product of the bubble-containing hydraulic composition of the present invention is preferably 0.3 or more, more preferably 0.4 or more, and further preferably 0.5 or more from the viewpoint of strength, and preferably 0.9 or less, more preferably 0.8 or less, and further preferably 0.7 or less from the viewpoint of handleability.

The bubble-containing hydraulic composition of the present invention contains bubbles. An average bubble size in the hardened product of the bubble-containing hydraulic composition of the present invention is preferably 230 µm or more, more preferably 250 µm or more, and further preferably 300 µm or more from the viewpoint of improving the strength of the hardened product, and preferably 800 µm or less, more preferably 700 µm or less, further preferably 600 µm or less, furthermore preferably 500 µm or less, and furthermore preferably 400 µm or less from the viewpoint of an aesthetic cross-sectional appearance.

The average bubble size is calculated such that the hardened product of the bubble-containing hydraulic composition is prepared and the hardened product is arbitrarily cut to prepare a cross section, and the cross section is observed by a digital microscope and the diameters of the cross sections of one hundred bubbles are arbitrarily measured to calculate the average bubble size from the average (arithmetic mean) of those values. Note that, when measuring the diameters of the cross sections of bubbles, if the cross section of a bubble is circular, the diameter is measured, if the cross section of a bubble is ellipsoidal, the long axis is measured, and if the cross section of a bubble is irregular, the longest portion is measured.

The present invention provides a method for producing a bubble-containing hydraulic composition including the following steps 1 and 2.

The following foaming agent for hydraulic compositions is the same as the foaming agent for hydraulic compositions of the present invention, and the aspects described in the foaming agent for hydraulic compositions of the present invention can be appropriately applied thereto.

### <Step 1>

A step of foaming a liquid composition containing a foaming agent for hydraulic compositions and water to obtain a foam,
the foaming agent for hydraulic compositions containing component (A), wherein the agent contains components (A1) and (A2) as component (A), a total content of components (A1) and (A2) in component (A) is 99 mass% or more, and a mass ratio of a content of component (A1) to a content of component (A2), (A1)/(A2), is 0.2 or more and 2.4 or less.

### <Step 2>

A step of mixing a hydraulic powder, water, and the foam obtained in step 1.

Note that step 2 may be a step of preparing a hydraulic composition containing the hydraulic powder and water, and mixing the hydraulic composition and the foam obtained in step 1.

The bubble-containing hydraulic composition of the present invention can be prepared by this producing method.

The aspects described in the foaming agent for hydraulic compositions of the present invention and the bubble-containing hydraulic composition of the present invention can be appropriately applied to the method for producing a bubble-containing hydraulic composition of the present invention.

The content of each component and the mass ratio between them described in the bubble-containing hydraulic composition of the present invention can be appropriately applied in the method for producing a bubble-containing hydraulic composition of the present invention, provided that the content of each component is read as a mixing amount.

In step 1, an expansion ratio of the liquid composition depends on the use of the hydraulic composition or the like, but is preferably 5 times or more, more preferably 7 times or more, and further preferably 10 times or more from the viewpoint of economy, and preferably 30 times or less, more preferably 25 times or less, and further preferably 20 times or less from the viewpoint of kneading performance.

In step 2, an amount of the foam mixed to the hydraulic composition depends on the use of the hydraulic composition or the like, but is preferably 50 volume% or more, more preferably 100 volume% or more, and further preferably 150 volume% or more from the viewpoint of reducing the weight of a hardened product of the bubble-containing hydraulic composition, and preferably 400 volume% or less, more preferably 300 volume% or less, and further preferably 200 volume% or less from the viewpoint of the strength of the hardened product of the bubble-containing hydraulic composition. In this producing method, admixture agents or admixture materials publicly known in the art can be mixed in step 1 and/or step 2.

### [Bubble-containing gypsum slurry and method for producing the same]

The hydraulic powder in the bubble-containing hydraulic composition of the present invention is preferably gypsum. In the present invention, the bubble-containing hydraulic composition wherein the hydraulic powder is gypsum is also referred to as a bubble-containing gypsum slurry.

In other words, the present invention provides a bubble-containing gypsum slurry containing gypsum, water, and component (A), wherein the slurry contains components (A1) and (A2) as component (A), a total content of components (A1) and (A2) in component (A) is 99 mass% or more, and a mass ratio of a content of component (A1) to a content of component (A2), (A1)/(A2), is 0.2 or more and 2.4 or less. The bubble-containing gypsum slurry of the present invention is suitably used for gypsum boards.

The matters described in the foaming agent for hydraulic compositions of the present invention, the bubble-containing hydraulic composition of the present invention, and the method for producing a bubble-containing hydraulic composition of the present invention can be appropriately applied to the bubble-containing gypsum slurry of the present invention.

The bubble-containing gypsum slurry of the present invention can further contain component (B).

The bubble-containing gypsum slurry of the present invention can further contain component (C).

Components (A), (A1), (A2), (B), and (C) are the same as in the aspects described in the foaming agent for hydraulic compositions of the present invention.

The content of each component and the mass ratio between them described in the bubble-containing hydraulic composition of the present invention can be appropriately applied in the bubble-containing gypsum slurry of the present invention, provided that the hydraulic powder is read as gypsum.

A specific gravity and an average bubble size in a hardened product of the bubble-containing gypsum slurry of the present invention each fall within the same range as the range described in the bubble-containing hydraulic composition of the present invention.

As the gypsum, any gypsum such as high-quality neutralized gypsum, phosphogypsum which is a byproduct of phosphoric acid, flue gas desulfurization gypsum generated by thermal power, natural gypsum containing various impurities or clay, a mixture of those, or the like can be used.

The gypsum contains clay composed mainly of hydrous silicate minerals with a layered structure (hereinafter referred to as clay minerals), and examples of the clay minerals contained as fine-grained minerals in this clay include kaolin minerals (kaolinite, dickite, and nacrite), serpentine (lizardite, antigorite, and chrysotile), mica clay minerals (illite, sericite, glauconite, and celadonite), chlorite, vermiculite, and smectite (montmorillonite, beidellite, nontronite, saponite, and hectorite).

The gypsum may be anhydrous gypsum, hemihydrate gypsum, dihydrate gypsum, or the like. As raw material gypsum, natural gypsum or chemical gypsum such as neutralized gypsum or by-product gypsum or the like can be used alone or a mixture of two or more of those can be used. Examples of primary chemical gypsum include phosphogypsum, fluorogypsum, titanium gypsum, or flue gas desulfurization gypsum, or the like. Further, the raw material gypsum may contain recycled gypsum. The recycled gypsum may be any recycled gypsum recovered from gypsum board waste that gypsum board manufacturers generate on their own, gypsum board waste generated during new construction and during demolition, or the like. The present invention can be suitably used for any one or more of these types of raw material gypsum, and also has excellent effects on those obtained by blending them at various proportions.

The bubble-containing gypsum slurry of the present invention can contain additives used for gypsum boards or the like. Examples of such additives include general-purpose water reducing agents, anti-foaming agents, foam control agents, hardening control agents, water repellents, adhesives, retarders, and others, and glass fiber, carbon fiber, used paper, virgin pulp, or the like is further added as reinforcing fiber, or perlite, styrene foam, or the like is used together as lightweight aggregate to produce gypsum boards.

The present invention provides a method for producing a bubble-containing gypsum slurry including the following steps 1 and 2.

The following foaming agent for hydraulic compositions is the same as the foaming agent for hydraulic compositions of the present invention, and the aspects described in the foaming agent for hydraulic compositions of the present invention can be appropriately applied thereto.

### <Step 1>

A step of foaming a liquid composition containing a foaming agent for hydraulic compositions and water to obtain a foam,
the foaming agent for hydraulic compositions containing component (A), wherein the agent contains components (A1) and (A2) as component (A), a total content of components (A1) and (A2) in component (A) is 99 mass% or more, and a mass ratio of a content of component (A1) to a content of component (A2), (A1)/(A2), is 0.2 or more and 2.4 or less.

### <Step 2>

A step of mixing gypsum, water, and the foam obtained in step 1.

Note that step 2 may be a step of preparing a gypsum slurry containing gypsum and water, and mixing the gypsum slurry and the foam obtained in step 1.

The bubble-containing gypsum slurry of the present invention can be prepared by this producing method.

The aspects described in the foaming agent for hydraulic compositions of the present invention, the bubble-containing hydraulic composition and the method for producing the same of the present invention, and the bubble-containing gypsum slurry of the present invention can be appropriately applied to the method for producing a bubble-containing gypsum slurry of the present invention.

The content of each component and the mass ratio between them described in the bubble-containing hydraulic composition of the present invention can be appropriately applied in the method for producing a bubble-containing hydraulic composition of the present invention, provided that the hydraulic powder is read as gypsum, and further, the content of each component is read as a mixing amount. The foam and the gypsum slurry used for mixing each preferably have a temperature of 15°C or more and 40°C or less.

Steps 1 and 2 can be performed in conformity with the method for producing a bubble-containing hydraulic composition of the present invention.

### Examples

The components used in examples and comparative examples are shown below.

### Component (A)

· C10AS: sodium decyl sulfate, component (A1)
· C12AS: sodium lauryl sulfate, component (A2)
· C14AS: sodium myristyl sulfate

### (1) Preparation of foaming agent for hydraulic compositions

The foaming agents for hydraulic compositions shown in Tables 1 and 2 were prepared in the following manner. Raw materials were added to a 50-mL screw cap tube at a predetermined proportion to be 30 g in total, and stirred with a stirrer at 1000 rpm for 3 hours. If the solution was viscous and stirring was inefficient, the solution was appropriately heated at 40°C.

### (2) Preparation of gypsum slurry

The prepared foaming agents for hydraulic compositions in Tables 1 and 2 were each mixed with water at a mass ratio of 0.3 to 99.7 to prepare an aqueous solution having a concentration of the foaming agent for hydraulic compositions of 0.3 mass% (on an as-is basis). 19 g of the prepared aqueous solution was added to a 1-L disposable cup, and using a blade with six flat paddles (FP-50, manufactured by AS ONE Corporation) at 2000 rpm (EUROSTAR 200 control, manufactured by IKA JAPAN K.K.), the solution was stirred for 15 seconds while rotating the container by hand, and the container was put down and the solution was further stirred for 45 seconds to obtain a foam.

200 g of calcined gypsum, 4 g of dihydrate gypsum, 127 g of tap water in which 1.5 g of potassium sulfate was dissolved, and 0.36 g of a water reducing agent (MIGHTY 150, manufactured by Kao Corporation) were added to a 500-mL disposable cup, and stirred for 5 seconds using a hand mixer (MK-H4, manufactured by Panasonic Corporation) with its knob set to 3 to prepare a gypsum slurry before putting into the foam. The whole amount of the prepared gypsum slurry was put into 19 g of the foam prepared in the 1-L disposable cup, and they were kneaded in the 1-L disposable cup using the blade with six flat paddles at 1150 rpm for 10 seconds to obtain a bubble-containing gypsum slurry.

The foam and the gypsum slurry used for kneading both had a temperature of 20°C.

### (3) Measurement of specific gravity of gypsum sample

The obtained bubble-containing gypsum slurry was poured into a mold for columnar samples with a diameter of 5 cm and a height of 10 cm (PLAMOLD, manufactured by Nifco Inc.), and left to stand at room temperature for 1 hour or more. The hardened gypsum slurry was demolded from the mold for columnar samples, and dried by leaving it to stand in a constant temperature bath at 80°C for 17 hours, and then the weight of the obtained sample was measured. The weight of the obtained sample was divided by the capacity of the mold to calculate the specific gravity of the gypsum sample. The results are shown in Tables 1 and 2.

### (4) Measurement of average bubble size in gypsum sample

The portion at a height of 5 cm of the gypsum sample obtained in (3) was cut to prepare a cross section of the gypsum sample. The cross section was observed by a digital microscope (magnified 42 times), and the diameters of the cross sections of one hundred bubbles were measured in order from the smallest visible bubble to calculate an average bubble size from the arithmetic mean of those values. Note that, when measuring the diameters of the cross sections of bubbles, if the cross section of a bubble was circular, the diameter was measured, if the cross section of a bubble was ellipsoidal, the long axis was measured, and if the cross section of a bubble was irregular, the longest portion was measured. The results are shown in Tables 1 and 2.

### (5) Penetration resistance test

A needle with a diameter of 12.5 mm was pushed 6 cm into the side surface of the gypsum sample obtained in (3), and the penetration resistance value then was measured. In the measurement, a total of three measurements were taken at portions of 2.5 cm, 5 cm, and 7.5 cm from the bottom in the side surface of the gypsum sample, and the average value thereof was used as the penetration resistance value of the gypsum sample. The evaluation was conducted on example 1-1 and comparative examples 1-2 and 1-3. The results are shown in Table 2. The higher the penetration resistance value, the higher the strength of the gypsum slurry.

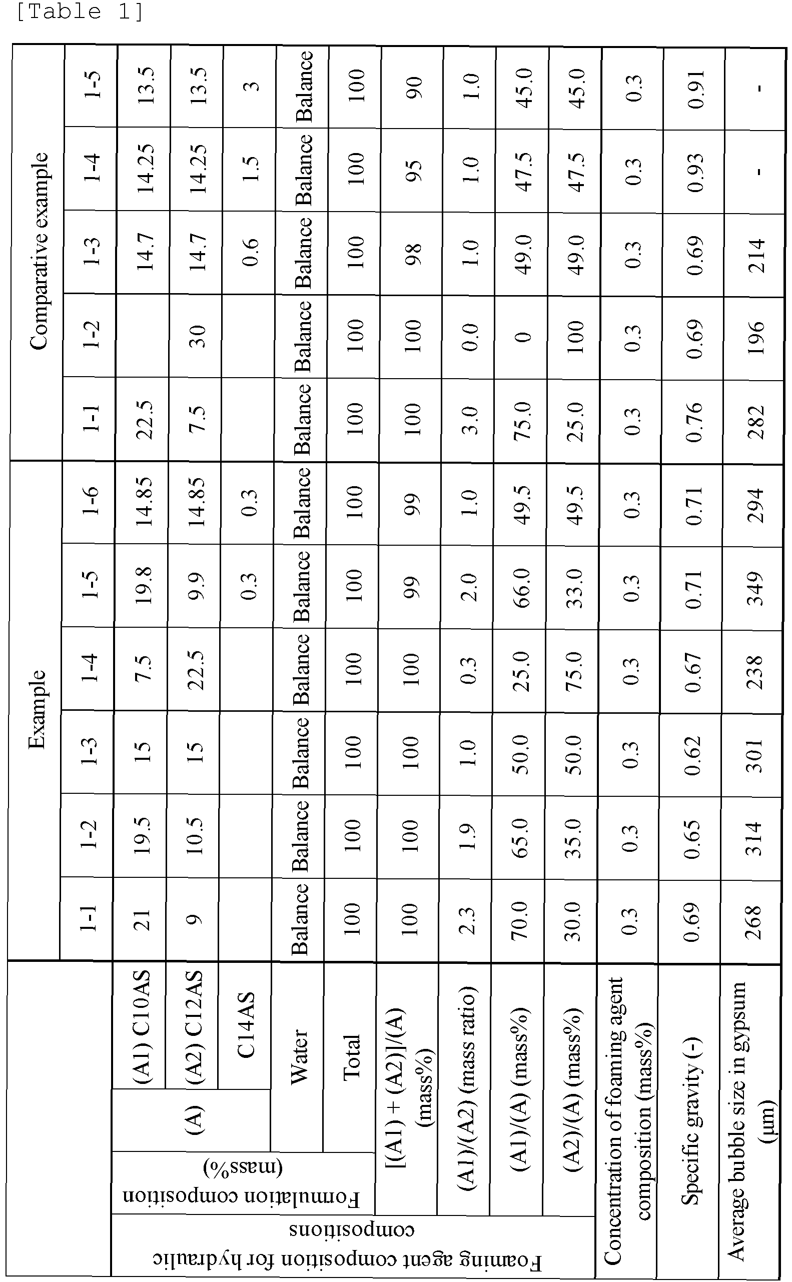

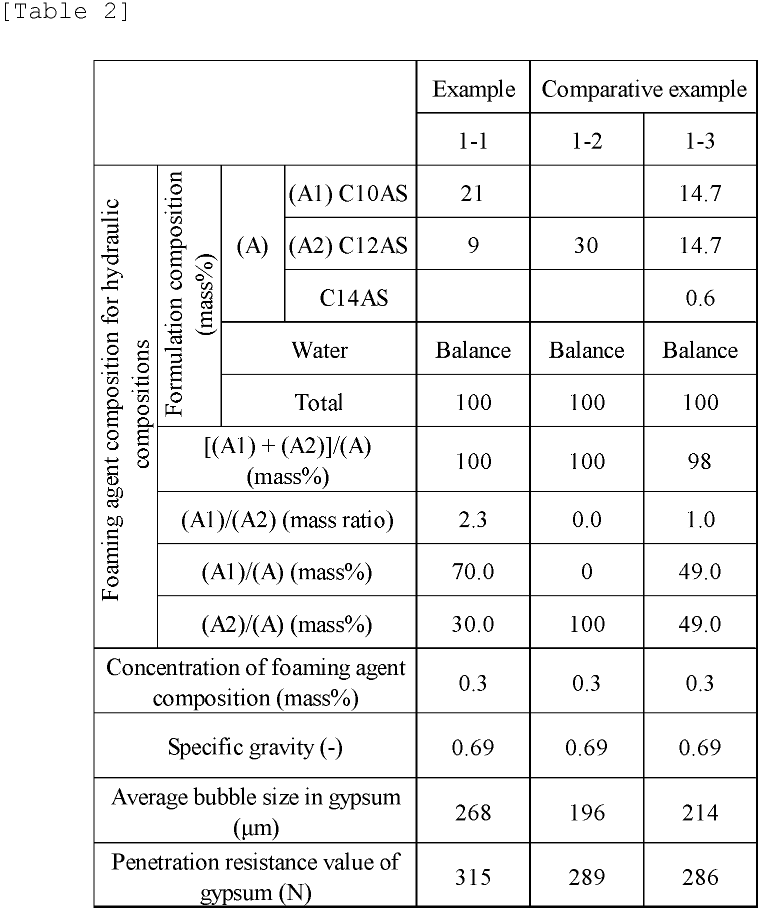

Table 1 shows that, compared to the foaming agents for hydraulic compositions of comparative examples 1-1, 1-4, and 1-5, the foaming agents for hydraulic compositions of examples 1-1 to 1-6 were able to reduce the specific gravity of the gypsum samples while the average bubble sizes thereof were 250 µm or more. Note that, in comparative examples 1-4 and 1-5, the average bubble sizes were not measured because the specific gravities were higher than in examples 1-1 to 1-6 and the gypsum samples did not contain an accurately measurable amount of bubbles.

Further, Table 2 shows that, compared to the foaming agents for hydraulic compositions of comparative examples 1-2 and 1-3, the foaming agent for hydraulic compositions of example 1-1 was able to increase the average bubble size in the gypsum and was able to increase the strength of the gypsum sample as indicated by the results of Table 2 while the gypsum samples had the same specific gravity.

### (6) Evaluation of performance after freezing and thawing

85 mL of the foaming agent for hydraulic compositions of example 1-3 was placed in a Maruemu screw tube bottle No. 8 (height 12 cm, capacity 110 mL), and frozen by storing it at 0°C for 3 days. The sample solidified or forming a precipitation was thawed by leaving it to stand at 20°C for 2 hours, and 2 mL of the foaming agent for hydraulic compositions was collected from a liquid surface height of 1 cm, and this was used as the upper layer. On the other hand, 2 mL of the foaming agent for hydraulic compositions was collected from a height of 0.5 cm from the bottom of the Maruemu screw tube bottle, and this was used as the lower layer. Gypsum slurries were prepared in the same manner as in the above (2) by using these collected samples of the foaming agent for hydraulic compositions, and the average bubble sizes in the gypsum samples were determined in the same manner as in the above (4). The results are shown in Table 3.

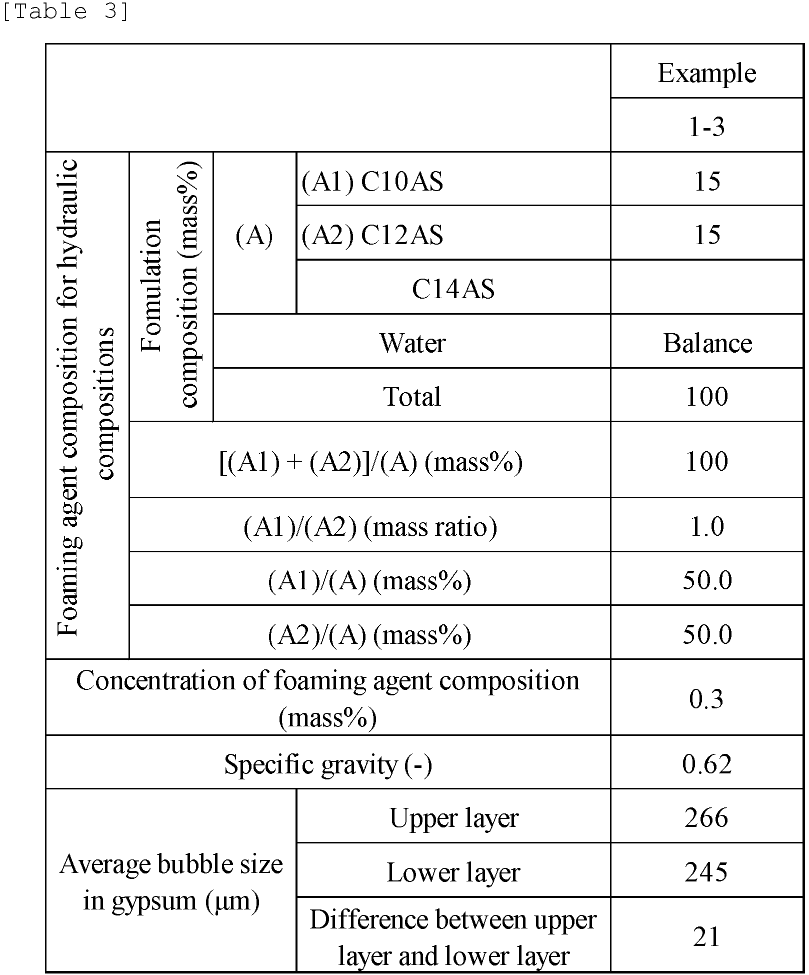

It is understood from Table 3 that there was a small difference between the average bubble sizes in the gypsum samples prepared by using the upper layer and the lower layer of the foaming agent for hydraulic compositions of example 1-3 after freezing and thawing, and there was less unevenness in the concentration of the foaming agent for hydraulic compositions after solidification and rethawing.

## Claims

1. A bubble-containing hydraulic composition comprising a hydraulic powder, water, and (A) an alkyl or alkenyl sulfate or a salt thereof (hereinafter referred to as component (A)), wherein the composition contains, as the component (A), (A1) an alkyl or alkenyl sulfate having an alkyl or alkenyl group with 10 carbons, or a salt thereof (hereinafter referred to as component (A1)), and (A2) an alkyl or alkenyl sulfate having an alkyl or alkenyl group with 12 carbons, or a salt thereof (hereinafter referred to as component (A2)), a total content of the components (A1) and (A2) in the component (A) is 99 mass% or more, and a mass ratio of a content of the component (A1) to a content of the component (A2), (A1)/(A2), is 0.2 or more and 2.4 or less.

2. The bubble-containing hydraulic composition according to claim 1, wherein an average bubble size of a hardened product of the bubble-containing hydraulic composition is 220 µm or more and 800 µm or less.

3. The bubble-containing hydraulic composition according to claim 1 or 2, wherein the composition does not comprise an alkyl or alkenyl sulfate having an alkyl or alkenyl group with 14 or more carbons, or a salt thereof.

4. The bubble-containing hydraulic composition according to any one of claims 1 to 3, wherein the composition comprises the component (A) in an amount of 0.0005 parts by mass or more and 0.01 parts by mass or less relative to 100 parts by mass of the hydraulic powder.

5. The bubble-containing hydraulic composition according to any one of claims 1 to 4, wherein a content of a polyoxyethylene alkyl or alkenyl ether sulfate or a salt thereof is 0.001 parts by mass or less relative to 100 parts by mass of the hydraulic powder.

6. The bubble-containing hydraulic composition according to any one of claims 1 to 5, wherein the hydraulic powder is gypsum.

7. The bubble-containing hydraulic composition according to any one of claims 1 to 6, wherein the component (A1) is an alkyl or alkenyl sulfate having a linear alkyl or alkenyl group with 10 carbons, or a salt thereof, and the component (A2) is an alkyl or alkenyl sulfate having a linear alkyl or alkenyl group with 12 carbons, or a salt thereof.

8. The bubble-containing hydraulic composition according to any one of claims 1 to 7, wherein a content of the component (A1) in the component (A) is 20 mass% or more and 75 mass% or less, and a content of the component (A2) in the component (A) is 25 mass% or more and 80 mass% or less.

9. A method for producing a bubble-containing hydraulic composition comprising the following steps 1 and 2:
<step 1>
a step of foaming a liquid composition containing a foaming agent for hydraulic compositions and water to obtain a foam,
the foaming agent for hydraulic compositions containing (A) an alkyl or alkenyl sulfate or a salt thereof (hereinafter referred to as component (A)), wherein the agent contains, as the component (A), (A1) an alkyl or alkenyl sulfate having an alkyl or alkenyl group with 10 carbons, or a salt thereof (hereinafter referred to as component (A1)), and (A2) an alkyl or alkenyl sulfate having an alkyl or alkenyl group with 12 carbons, or a salt thereof (hereinafter referred to as component (A2)), a total content of the components (A1) and (A2) in the component (A) is 99 mass% or more, and a mass ratio of a content of the component (A1) to a content of the component (A2), (A1)/(A2), is 0.2 or more and 2.4 or less; and
<step 2>
a step of mixing a hydraulic powder, water, and the foam obtained in step 1.

10. The method for producing a bubble-containing hydraulic composition according to claim 9, wherein an average bubble size of a hardened product of the bubble-containing hydraulic composition is 220 µm or more and 800 µm or less.

11. The method for producing a bubble-containing hydraulic composition according to claim 9 or 10, wherein the hydraulic powder is gypsum.

12. A foaming agent for hydraulic compositions comprising (A) an alkyl or alkenyl sulfate or a salt thereof (hereinafter referred to as component (A)), wherein the agent contains, as the component (A), (A1) an alkyl or alkenyl sulfate having an alkyl or alkenyl group with 10 carbons, or a salt thereof (hereinafter referred to as component (A1)), and (A2) an alkyl or alkenyl sulfate having an alkyl or alkenyl group with 12 carbons, or a salt thereof (hereinafter referred to as component (A2)), a total content of the components (A1) and (A2) in the component (A) is 99 mass% or more, and a mass ratio of a content of the component (A1) to a content of the component (A2), (A1)/(A2), is 0.2 or more and 2.4 or less.

13. The foaming agent for hydraulic compositions according to claim 12, wherein the agent does not comprise an alkyl or alkenyl sulfate having an alkyl or alkenyl group with 14 or more carbons, or a salt thereof.

14. The foaming agent for hydraulic compositions according to claim 12 or 13, wherein the agent comprises the component (A) in an amount of 2 mass% or more and 40 mass% or less.

15. The foaming agent for hydraulic compositions according to any one of claims 12 to 14, wherein a content of a polyoxyethylene alkyl or alkenyl ether sulfate or a salt thereof is 10 mass% or less.

16. The foaming agent for hydraulic compositions according to any one of claims 12 to 15, wherein the agent is used for gypsum slurries.
